# EUROPEAN PATENT SPECIFICATION

(11) **EP 2 147 781 B1**
(45) Date of publication and mention of the grant of the patent: **27.04.2011**
(21) Application number: 09165824.5
(22) Date of filing: 17.07.2009
(51) Int. Cl.: B32B 5/26, A47C 27/00, A41D 31/00, A62B 17/00, D03D 15/12

(54) **Layered product with high thermal insulation and self-extinguishing capacity**
Geschichtetes Produkt mit hoher Wärmeisolierung und selbsterlöschender Fähigkeit
Produit stratifié doté d'une grande isolation thermique et d'une capacité auto-extinguible

(30) Priority: 24.07.2008 IT MI20081354
(43) Date of publication of application: 27.01.2010
(73) Proprietor: Nat Style Limited, London Greater London W1S 4HG (GB)
(72) Inventor: Fantino, Roberto, 20068 Peschiera Borromeo (MI) (IT)
(74) Representative: Modiano, Micaela Nadia

(56) References cited:
- US-A- 3 628 995
- US-A- 3 769 144
- US-A- 4 001 477
- US-A- 4 502 153
- US-A1- 2002 142 132
- US-A1- 2006 264 136

## Description

The present invention relates to a layered product with high thermal insulation and self-extinguishing capacity.

As is known, many fields of application, such as blankets, bed accessories, upholstery, coverings, items of clothing and the like, use materials which contain flame retardants capable of limiting or inhibiting flame propagation.

This characteristic is obtained generally by means of fireproofing treatments during textile enhancement. This particularity tends, over a period of use and as a consequence of maintenance, to reduce its efficiency levels.

Moreover, known solutions are unable to provide protection in the transfer of heat in the presence of sources of convective flame and/or irradiation with sufficiently significant levels.

Another problem is constituted by the fact that when the textile elements with which the products cited above are made undergo combustion, they release noxious gases and fumes of various compositions, even emitting toxic gases.

During combustion, most of the fibers that are currently used and the flame-retardant treatments that are applied to textiles emit hydrocyanic acid, halogens, sulfur dioxide and so forth, and accordingly in confined space or more simply in a dwelling house this phenomenon is in itself a risk-increasing factor.

The aim of the invention is to solve the problems cited above by providing a layered product particularly suitable for blankets, bed accessories; upholstery, coverings, items of clothing and the like with high thermal insulation and self-extinguishing capacity, which is obtained from per se known elements which are assembled to obtain an assembly which does not produce noxious or toxic fumes and gases during combustion.

Within this aim, an object of the invention is to provide a layered product which, in addition to providing adequate insulation against flames and heat, is capable of giving particular aesthetic features, pleasantness to the touch, and softness, so as to meet even the most demanding requirements of fashion.

Another object of the present invention is to provide a layered product which, thanks to its particular constructive characteristics, provides the greatest assurances of reliability and safety in use.

Another object of the present invention is to provide a layered product with high thermal insulation capacity which can be obtained easily starting from commonly commercially available elements and materials and is also competitive from a merely economic standpoint and combines particular technical characteristics also with aesthetic and comfort qualities.

This aim and these and other objects which will become better apparent hereinafter are achieved by a layered product with high thermal insulation and self-extinguishing capacity according to the invention, characterized in that it comprises a first layer constituted by a fabric obtained with a yam provided by means of an intimate mix of cellulose fiber and phenolic fiber, said first layer being superimposed on an intermediate layer made of a phenolic fiber cotton wool, a second layer being further provided which is constituted by a fabric obtained with a cellulose fiber yam associated with said intermediate layer on the opposite side with respect to said first layer, means for joining said layers being further provided.

Further characteristics and advantages will become better apparent from the description of a preferred but not exclusive embodiment of a layered product with high thermal insulation and self-extinguishing capacity, illustrated by way of non-limiting example in the accompanying drawings, wherein:

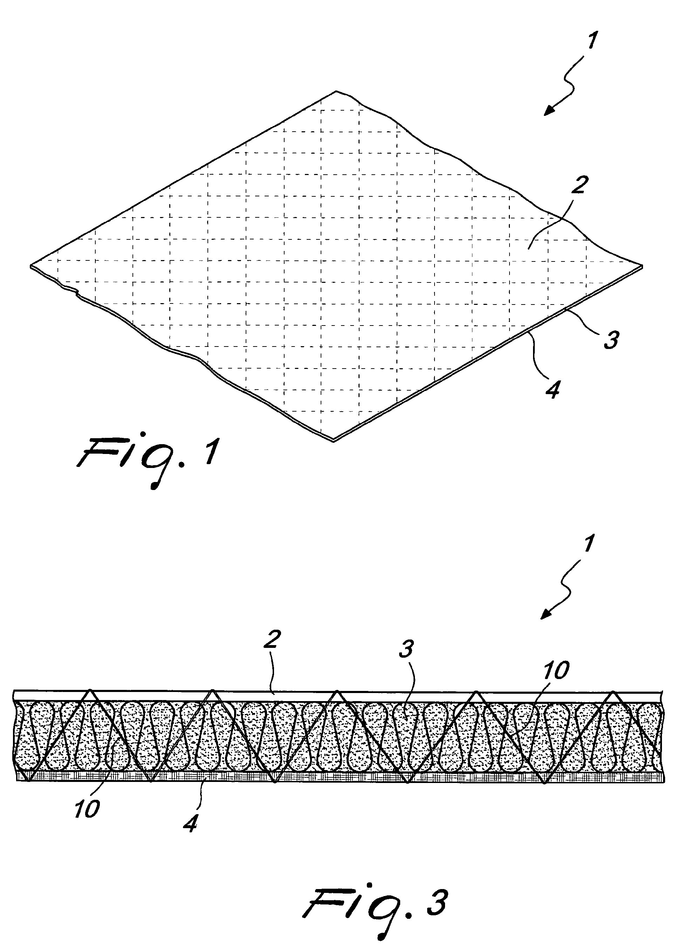

Figure 1 is a schematic perspective view of a layered product such as a blanket;

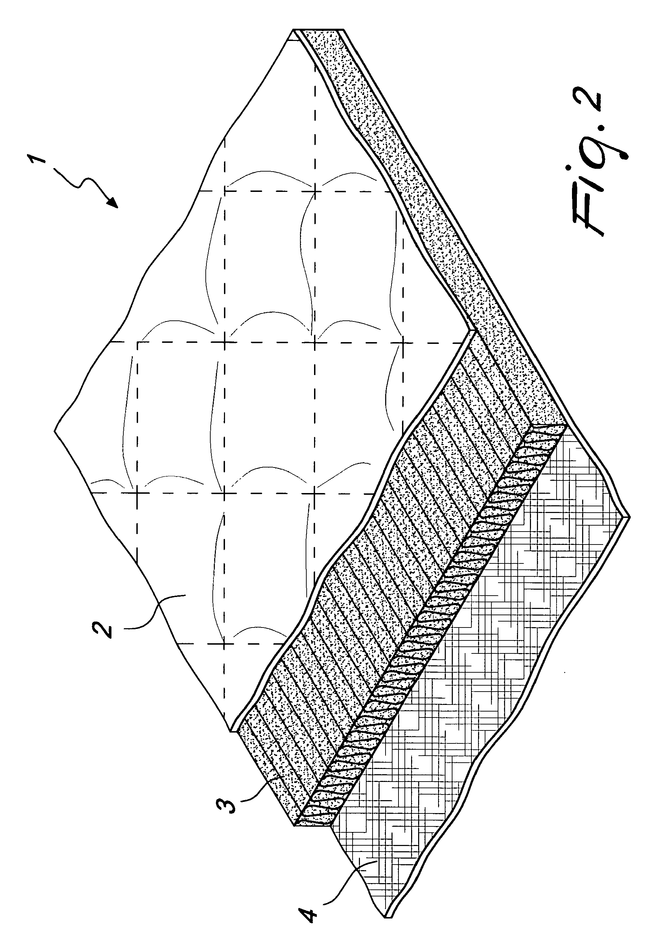

Figure 2 is a view of the layered product, illustrating the layers that constitute it;
Figure 3 is a sectional view of the layered product.

With reference to the figures, the layered product with high thermal insulation and self-extinguishing capacity is generally designated by the reference numeral 1.

The layered product, which can be used for example to provide blankets, accessories for beds, upholstery, coverings, items of clothing and the like, comprises a first layer 2, which is provided by means of a fabric obtained with a yam constituted by the intimate mixing of cellulose fiber and phenolic fiber.

The cellulose component provides the level of pleasantness to the touch, with a smooth and comfortable appearance, while the phenolic fiber, advantageously constituted by a novoloid fiber, provides the heat resistance function and the better tenacity during combustion.

Experimental tests that have been conducted have shown that the optimum ratio is achieved by using artificial cellulose fiber in a quantity of 60% by weight and 40% by weight of novoloid fiber.

An increase in novoloid fiber would provide a very limited improvement to the thermal insulation against heat, but would instead increase cost considerably.

The first layer 2 or outer layer is superimposed on an intermediate layer 3, advantageously provided by a cotton wool made of phenolic fiber, such as novoloid fiber, which is compressed so as to increase density and reduce its volume.

This aspect reduces the heat transfer rate, which with low-density cotton wools would accelerate heat conduction.

Advantageously, the thickness of the intermediate layer is at least 4 mm, preferably 5 mm, so as to retain a sufficient quantity of air, which becomes the best natural insulator, from a thermal standpoint.

The density of the cotton wool, with a thickness of 5 mm, can range advantageously from 150 g/m² to 250 g/m², preferably 200 g/m².

A second layer or outer layer 4 is applied to the intermediate layer, on the opposite face with respect to the one on which the first layer 2 is applied, predominantly has an aesthetic completion function and is obtained advantageously with an artificial cellulose fiber of the type used in a mix in the yarn for obtaining the first layer.

The use of an artificial cellulose fiber yarn has the purpose of achieving an optimum aesthetic and tactile aspect and of not emitting toxic fumes in case of combustion.

The second layer, which weighs approximately 120 g/m², can be subjected to dyeing or printing and it is further possible to enhance the luster characteristic with a mechanical finish by using a glazing calender.

The layers 2, 3 and 4 are stably joined to each other by way of connecting means which are advantageously provided by a quilting yam 10, constituted advantageously by a natural cotton fiber selected with the criterion of non-toxicity.

The density of the quilting stitches 10 and the count used are such that they do not exhibit flame propagation capacity even by pyrolysis effect.

From what has been described above it is evident that a layered product is provided in which the surfaces can be dyed or printed and in which the first layer that constitutes the outer exposed side has extremely high characteristics of resistance to combustion and moreover the coupling of the provided layers allows to also obtain a thermal insulation barrier, thus providing a product which combines the typical characteristics of pleasantness and warmth with high-level characteristics of softness, attractiveness and aesthetics, together with the possibility of constituting a highly effective protective element which has the fundamental characteristic of not emitting toxic gases in case of combustion.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A layered product (1) with high thermal insulation and self-extinguishing capacity **characterized in that** it comprises a first layer (2) constituted by a fabric obtained with a yam provided by means of an intimate mix of cellulose fiber and phenolic fiber, said first layer (2) being superimposed on an intermediate layer (3) made of a phenolic fiber cotton wool, a second layer (4) being further provided which is constituted by a fabric obtained with a cellulose fiber yarn associated with said intermediate layer (3) on the opposite side with respect to said first layer (2), means (10) for joining said layers being further provided.

2. The layered product according to claim 1, **characterized in that** said phenolic fiber is constituted by novoloid fiber.

3. The layered product according to claim 1, **characterized in that** said phenolic fiber is comprised in said first layer (2) in a quantity equal to, or lower than, 50%.

4. The layered product according to claim 1, **characterized in that** said intermediate layer (3) is made of novoloid fiber.

5. The layered product according to claim 1, **characterized in that** said cotton wool is in a quantity ranging from 150 to 250 g/m², with a thickness of said intermediate layer (3) ranging from 4 to 5 mm.

6. The layered product according to claim 1, **characterized in that** said second layer (4) is constituted by a fabric which has a weight ranging from 100 to 150 g/m².

7. The layered product according to claim 6, **characterized in that** said second layer (4) is subjected to a mechanical gloss finish by means of a glazing calender.

8. The layered product according to claim 1, **characterized in that** said means (10) for joining said layers comprise a quilting yarn.

9. The layered product according to claim 8, **characterized in that** said quilting yarn is constituted by a natural cotton fiber.

## Patentansprüche

1. Geschichtetes Produkt (1) mit großer thermischer Isolierung und Selbstlöschfähigkeit, **dadurch gekennzeichnet, dass** es eine erste Schicht (2) umfasst, die durch ein Gewebe gebildet ist, welches mit einem Garn gebildet ist, das durch eine gründliche Mischung von Zellulosefasern und Phenolharzfasern bereitgestellt ist, wobei die erste Schicht (2) einer Zwischenschicht (3) überlagert ist, welche aus einer Phenolharzfaser-Baumwollwatte hergestellt ist, wobei ferner eine zweite Schicht (4) bereitgestellt ist, die durch ein Gewebe gebildet ist, welches mit einem Zellulosefasergarn erhalten ist, das mit der Zwischenschicht (3) auf der entgegengesetzten Seite bezüglich der ersten Schicht (2) verbunden ist, wobei ferner Mittel (10) zum Verbinden der Schichten bereitgestellt sind.

2. Geschichtetes Produkt nach Anspruch 1, **dadurch gekennzeichnet, dass** die Phenolharzfaser durch Novoloid-Faser gebildet ist.

3. Geschichtetes Produkt nach Anspruch 1, **dadurch gekennzeichnet, dass** die Phenolharzfaser in der ersten Schicht (2) in einer Konzentration von 50 % oder darunter enthalten ist.

4. Geschichtetes Produkt nach Anspruch 1, **dadurch gekennzeichnet, dass** die Zwischenschicht (3) aus Novoloid-Fasern hergestellt ist.

5. Geschichtetes Produkt nach Anspruch 1, **dadurch gekennzeichnet, dass** die Baumwollwatte mit einem Flächengewicht im Bereich von 150 bis 250 g/m² vorhanden ist, wobei die Dicke der Zwischenschicht (3) von 4 bis 5 mm reicht.

6. Geschichtetes Produkt nach Anspruch 1, **dadurch gekennzeichnet, dass** die zweite Schicht (4) durch ein Gewebe gebildet ist, welches ein Flächengewicht von 100 bis 150 g/m² hat.

7. Geschichtetes Produkt nach Anspruch 6, **dadurch gekennzeichnet, dass** die zweite Schicht (4) mechanisch mittels eines Satinierkalenders Hochglanz erhält.

8. Geschichtetes Produkt nach Anspruch 1, **dadurch gekennzeichnet, dass** das Mittel (10) zum Verbinden der Schichten ein Steppgarn umfasst.

9. Geschichtetes Produkt nach Anspruch 8, **dadurch gekennzeichnet, dass** das Steppgarn aus einer natürlichen Baumwollfaser gebildet ist.

## Revendications

1. Produit stratifié (1) à grande isolation thermique et autoextinguibilité, **caractérisé en ce qu'**il comprend une première couche (2) constituée d'un tissu obtenu à l'aide d'un fil réalisé au moyen d'un mélange intime de fibres cellulosiques et de fibres phénoliques, ladite première couche (2) étant superposée à une couche intermédiaire (3) de coton hydrophile à fibres phénoliques, une deuxième couche (4) étant en outre présente, constituée d'un tissu obtenu avec un fil en fibres cellulosiques, associée à ladite couche intermédiaire (3) sur la face opposée par rapport à ladite première couche (2), un moyen (10) pour réunir lesdites couches étant en outre prévu.

2. Produit stratifié selon la revendication 1, **caractérisé en ce que** lesdites fibres phénoliques sont constituées par des fibres de Novoloid.

3. Produit stratifié selon la revendication 1, **caractérisé en ce que** lesdites fibres phénoliques sont présentes dans ladite première couche (2) dans une proportion égale ou inférieure à 50 %.

4. Produit stratifié selon la revendication 1, **caractérisé en ce que** ladite couche intermédiaire (3) est en fibres de Novoloid.

5. Produit stratifié selon la revendication 1, **caractérisé en ce que** ledit coton hydrophile est présent à raison de 150 à 250 g/m², l'épaisseur de ladite couche intermédiaire (3) étant de 4 à 5 mm.

6. Produit stratifié selon la revendication 1, **caractérisé en ce que** ladite deuxième couche (4) est constituée par un tissu pesant de 100 à 150 g/m².

7. Produit stratifié selon la revendication 6, **caractérisé en ce que** ladite deuxième couche (4) subit un finissage mécanique de lustrage à l'aide d'une calandre de glaçage.

8. Produit stratifié selon la revendication 1, **caractérisé en ce que** ledit moyen (10) pour réunir lesdites couches contient un fil à matelasser.

9. Produit stratifié selon la revendication 8, **caractérisé en ce que** ledit fil à matelasser est constitué par des fibres naturelles de coton.
